# EUROPEAN PATENT APPLICATION

(11) **EP 4 498 449 A2**
(43) Date of publication of application: **29.01.2025**
(21) Application number: 24185207.8
(22) Date of filing: 28.06.2024
(51) Int. Cl.: H01M 4/38, H01M 4/58, H01M 4/62, H01M 10/052, H01M 10/0568, H01M 10/0569

(54) **FLUORINATED ELECTROLYTE COMPOSITION FOR CHALCOGEN BATTERY**

(30) Priority: 29.06.2023 US 202363523946 P; 07.08.2023 US 202363531180 P
(71) Applicant: II-VI Delaware, Inc., Wilmington, Delaware 19801 (US)
(72) Inventor: Du Hill, Linze, Butler, 16002 (US); Gao, Zan, Wexford, 15090 (US); Xu, Wen-Qing, Sarver, 16055 (US); Lu, Xinyu, Wexford, 15090 (US); Masarapu, Charan, Sewickley, 15143 (US); Stasko, William B., Wilmington, 19801 (US); Zhou, Evan, Wilmington, 19801 (US)
(74) Representative: Forresters IP LLP

(57) **Abstract**

A battery includes: an anode; a cathode including chalcogen separated from the anode; and an electrolyte composition in fluid communication with the anode and the cathode, the electrolyte composition including a fluorinated solvent including: greater than 30 vol% fluorinated carbonate, used with the cathode including a carbon-chalcogen composite having at least 50 wt% chalcogen based on solids weight of the carbon-chalcogen composite; and/or at least 20 vol% fluorinated carbonate and a fluorinated compound different from the fluorinated carbonate, the vol% based on total volume of the electrolyte composition excluding salts.

## Description

### CROSS-REFERENCE TO RELATED APPLICATIONS

This application claims priority to United States Provisional Patent Application Nos. 63/523,946 filed on June 29, 2023 and 63/531,180 filed on August 7, 2023, the disclosures of which are incorporated by reference herein in their entireties.

### BACKGROUND

### 1. Field

The disclosed subject matter relates generally to a fluorinated electrolyte composition for chalcogen batteries.

### 2. Technical Considerations

In battery applications, an electrolyte composition in fluid communication with the anode and the cathode allows ions to move between the electrodes, causing the battery to charge and discharge. In lithium-chalcogen (e.g., lithium-sulfur) batteries, electrolyte compositions have been developed; however, many of these electrolyte compositions require rich electrolyte conditions (e.g., E/S ratios > 10) for adequate performance. There is a lack of electrolyte compositions for such batteries employing lean electrolyte conditions (e.g., E/S ratios ≤ 10).

### SUMMARY

Accordingly, it is an object of the presently disclosed subject matter to provide a battery that overcomes some or all of the deficiencies identified above.

According to non-limiting embodiments or aspects, provided is a battery including an anode; a cathode including chalcogen separated from the anode; and an electrolyte composition in fluid communication with the anode and the cathode, the electrolyte composition including a fluorinated solvent including: greater than 30 vol% fluorinated carbonate, used with the cathode including a carbon-chalcogen composite having at least 50 wt% chalcogen based on solids weight of the carbon-chalcogen composite; and/or at least 20 vol% fluorinated carbonate and a fluorinated compound different from the fluorinated carbonate, the vol% based on total volume of the electrolyte composition excluding salts.

In some non-limiting embodiments or aspects, the electrolyte composition may include at least 40 vol% of the fluorinated solvent, based on total volume of the electrolyte composition excluding salts.

In some non-limiting embodiments or aspects, the fluorinated carbonate may include fluoroethylene carbonate.

In some non-limiting embodiments or aspects, the fluorinated solvent may include the fluorinated carbonate and the fluorinated compound, the fluorinated carbonate including fluoroethylene carbonate, the fluoroethylene carbonate including at least 20 vol%, based on total volume of the electrolyte composition excluding salts.

In some non-limiting embodiments or aspects, the fluorinated compound may include a fluorinated ester, a fluorinated ether, a second fluorinated carbonate, a fluorinated sulfone, a fluorinated epoxy, a fluorinated nitrile, a fluorinated (meth)acrylate, a fluorinated silane, a fluorinated (poly)glycol ether, a fluorinated acetate, a fluorinated propionate and/or any combination thereof.

In some non-limiting embodiments or aspects, the fluorinated compound may include a fluorinated ether.

In some non-limiting embodiments or aspects, the electrolyte composition may include a plurality of different salts.

In some non-limiting embodiments or aspects, the battery may have a salt concentration of the plurality of different salts of from 0.2-6.0M.

In some non-limiting embodiments or aspects, the fluorinated carbonate and/or the fluorinated compound may include a cyclic fluorinated carbonate.

In some non-limiting embodiments or aspects, the electrolyte composition may further include a nitrile.

In some non-limiting embodiments or aspects, the anode may include lithium, and the cathode may include sulfur.

In some non-limiting embodiments or aspects, the battery may include an electrolyte to sulfur (E/S) ratio of up to 10.

In some non-limiting embodiments or aspects, the sulfur cathode may include at least 30 wt% of sulfur.

In some non-limiting embodiments or aspects, the cathode may have a loading level of from 2-100 mg-S/cm².

In some non-limiting embodiments or aspects, the battery may include a secondary battery.

In some non-limiting embodiments or aspects, the battery may include a coin cell, a cylindrical cell, and/or a pouch cell.

In some non-limiting embodiments or aspects, the battery may have an activation energy of at least 95 kJ/mol.

In some non-limiting embodiments or aspects, the electrolyte composition may further include a non-fluorinated solvent, the non-fluorinated solvent having a hybrid atom and a molecular weight of up to 150 g/mol.

In some non-limiting embodiments or aspects, the cathode may include a carbon-chalcogen composite having at least 50 wt% chalcogen based on solids weight of the carbon-chalcogen composite and/or at least 35 wt% chalcogen based on total solids weight of the cathode.

According to non-limiting embodiments or aspects, provided is a battery including an anode; a cathode including chalcogen separated from the anode; and an electrolyte composition in fluid communication with the anode and the cathode, the electrolyte composition including a fluorinated solvent including: (1) greater than 30 vol% fluorinated carbonate; or (2) at least 10 vol% fluorinated carbonate and a fluorinated compound different from the fluorinated carbonate; or (3) at least 2 vol% fluorinated carbonate and a fluorinated compound different from the fluorinated carbonate, the vol% based on total volume of the electrolyte composition excluding salts; the electrolyte composition further including a plurality of different salts.

In some non-limiting embodiments or aspects, the anode may include lithium, and the cathode may include sulfur.

Further embodiments or aspects are set forth in the following numbered clauses:
Clause 1: A battery, comprising: an anode; a cathode comprising chalcogen separated from the anode; and an electrolyte composition in fluid communication with the anode and the cathode, the electrolyte composition comprising a fluorinated solvent comprising: greater than 30 vol% fluorinated carbonate, used with the cathode comprising a carbon-chalcogen composite having at least 50 wt% chalcogen based on solids weight of the carbon-chalcogen composite; and/or at least 20 vol% fluorinated carbonate and a fluorinated compound different from the fluorinated carbonate, the vol% based on total volume of the electrolyte composition excluding salts.
Clause 2: The battery of clause 1, wherein the electrolyte composition comprises at least 40 vol% of the fluorinated solvent, based on total volume of the electrolyte composition excluding salts.
Clause 3: The battery of clause 1 or 2, wherein the fluorinated carbonate comprises fluoroethylene carbonate.
Clause 4: The battery of any of clauses 1-3, wherein the fluorinated solvent comprises the fluorinated carbonate and the fluorinated compound, the fluorinated carbonate comprising fluoroethylene carbonate, the fluoroethylene carbonate comprising at least 20 vol%, based on total volume of the electrolyte composition excluding salts.
Clause 5: The battery of any of clauses 1-4, wherein the fluorinated compound comprises a fluorinated ester, a fluorinated ether, a second fluorinated carbonate, a fluorinated sulfone, a fluorinated epoxy, a fluorinated nitrile, a fluorinated (meth)acrylate, a fluorinated silane, a fluorinated (poly)glycol ether, a fluorinated acetate, a fluorinated propionate and/or any combination thereof.
Clause 6: The battery of clause 5, wherein the fluorinated compound comprises a fluorinated ether.
Clause 7: The battery of any of clauses 1-6, wherein the electrolyte composition comprises a plurality of different salts.
Clause 8: The battery of clause 7, having a salt concentration of the plurality of different salts of from 0.2-6.0M.
Clause 9: The battery of any of clauses 1-8, wherein the fluorinated carbonate and/or the fluorinated compound comprises a cyclic fluorinated carbonate.
Clause 10: The battery of any of clauses 1-9, wherein the electrolyte composition further comprises a nitrile.
Clause 11: The battery of any of clauses 1-10, wherein the anode comprises lithium, and the cathode comprises sulfur.
Clause 12: The battery of clause 11, wherein the battery comprises an electrolyte to sulfur (E/S) ratio of up to 10.
Clause 13: The battery of clause 11 or 12, wherein the sulfur cathode comprises at least 30 wt% of sulfur.
Clause 14: The battery of any of clauses 11-13, wherein the cathode has a loading level of from 2-100 mg-S/cm².
Clause 15: The battery of any of clauses 1-14, wherein the battery comprises a secondary battery.
Clause 16: The battery of any of clauses 1-15, wherein the battery comprises a coin cell, a cylindrical cell, and/or a pouch cell.
Clause 17: The battery of any of clauses 1-16, having an activation energy of at least 95 kJ/mol.
Clause 18: The battery of any of clauses 1-17, wherein the electrolyte composition further comprises a non-fluorinated solvent, the non-fluorinated solvent having a hybrid atom and a molecular weight of up to 150 g/mol.
Clause 19: The battery of any of clauses 1-18, wherein the cathode comprises a carbon-chalcogen composite having at least 50 wt% chalcogen based on solids weight of the carbon-chalcogen composite and/or at least 35 wt% chalcogen based on total solids weight of the cathode.
Clause 20: A battery, comprising: an anode; a cathode comprising chalcogen separated from the anode; and an electrolyte composition in fluid communication with the anode and the cathode, the electrolyte composition comprising a fluorinated solvent comprising: (1) greater than 30 vol% fluorinated carbonate; or (2) at least 10 vol% fluorinated carbonate and a fluorinated compound different from the fluorinated carbonate; or (3) at least 2 vol% fluorinated carbonate and a fluorinated compound different from the fluorinated carbonate, the vol% based on total volume of the electrolyte composition excluding salts; the electrolyte composition further comprising a plurality of different salts.
Clause 21: The battery of clause 20, wherein the anode comprises lithium, and the cathode comprises sulfur.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawing, all of which form a part of this specification, wherein like reference numerals designate corresponding parts in the various figures. It is to be expressly understood, however, that the drawing is for the purpose of illustration and description only and is not intended as a definition of the limits of the disclosed subject matter. As used in the specification and the claims, the singular forms of "a," "an," and "the" include plural referents unless the context clearly dictates otherwise.

### BRIEF DESCRIPTION OF THE DRAWING

Additional advantages and details of the disclosed subject matter are explained in greater detail below with reference to the exemplary embodiments or aspects that are illustrated in the accompanying figure, in which:

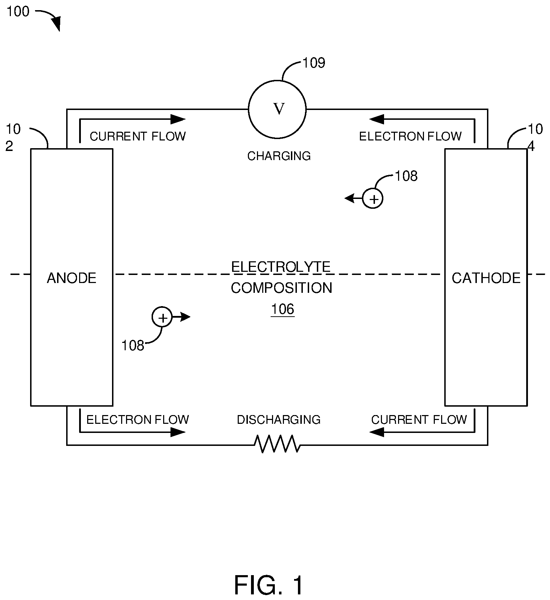

FIG. 1 shows a schematic view of a battery according to some non-limiting embodiments or aspects of the presently disclosed subject matter.

### DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawing, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms.

As used herein, the transitional term "comprising" (and other comparable terms, e.g., "containing" and "including") is "open-ended" and open to the inclusion of unspecified matter. Although described in terms of "comprising", the terms "consisting essentially of" and "consisting of" are also within the scope of the disclosure.

Non-limiting embodiments or aspects of the disclosed subject matter are directed to an electrolyte composition for use with a battery. Non-limiting embodiments or aspects of the disclosed subject matter are also directed to a battery comprising: an anode; a cathode; and an electrolyte composition in fluid communication (e.g. contact) with the anode and the cathode, the electrolyte composition as described herein. The battery may be a chalcogen battery as described herein.

In some non-limiting embodiments or aspects, the electrolyte composition may comprise a fluorinated solvent. The fluorinated solvent may comprise greater than 30 vol% fluorinated carbonate, based on total volume of the electrolyte composition excluding salts, such as at least 35 vol%, at least 40 vol%, at least 45 vol%, at least 50 vol%, at least 55 vol%, or at least 60 vol%. The fluorinated solvent may comprise up to 100 vol% fluorinated carbonate, based on total volume of the electrolyte composition excluding salts, such as up to 95 vol%, up to 80 vol%, up to 75 vol%, or up to 70 vol%.

In some non-limiting embodiments or aspects, the electrolyte composition may comprise a fluorinated solvent. The fluorinated solvent may comprise at least 20 vol% fluorinated carbonate and a fluorinated compound different from the fluorinated carbonate, based on total volume of the electrolyte composition excluding salts. The fluorinated carbonate may comprise at least 25 vol%, at least 30 vol%, at least 35 vol%, at least 40 vol%, at least 45 vol%, or at least 50 vol%, based on total volume of the electrolyte composition excluding salts. The fluorinated compound may comprise at least 5 vol%, at least 10 vol%, at least 15 vol%, at least 20 vol%, or at least 25 vol%, based on total volume of the electrolyte composition excluding salts.

In some non-limiting embodiments or aspects, the electrolyte composition may comprise at least 25 vol% of fluorinated solvent (e.g., fluorinated carbonate and/or fluorinated compound), such as at least at least 30 vol%, at least 35 vol%, at least 40 vol%, at least 45 vol%, at least 50 vol%, at least 55 vol%, at least 60 vol%, at least 65 vol%, at least 70 vol%, based on total volume of the electrolyte composition excluding salts.

The fluorinated carbonate may comprise fluoroethylene carbonate (FEC) [4-Fluoro-1,3-dioxolan-2-one].

In some non-limiting embodiments or aspects in which the fluorinated solvent comprises the fluorinated carbonate and the fluorinated compound, the fluorinated carbonate may comprise FEC in an amount of at least 20 vol%, based on total volume of the electrolyte composition excluding salts, such as at least 25 vol%, at least 30 vol%, at least 35 vol%, at least 40 vol%, at least 45 vol%, or at least 50 vol%.

The fluorinated compound used in combination with the fluorinated carbonate (e.g., FEC) may comprise a fluorinated ester, a fluorinated ether, a second fluorinated carbonate, a fluorinated sulfone, a fluorinated epoxy, a fluorinated nitrile, a fluorinated (meth)acrylate, a fluorinated silane, a fluorinated acetate, a fluorinated propionate, a fluorinated phosphate, a fluorinated sulfite, a fluorinated borate, a fluorinated benzene, a fluorinated pyridine, a fluorinated diketone, and/or any combination thereof.

The fluorinated ester may comprise alpha-(Trifluoromethyl)-gamma-valerolactone, 3-(Trifluoromethyl)dihydrofuran-2(3H)-one, Difluoromethyl 2,2,2-trifluoroethyl ether, 2,2,2-Trifluoroethyl formate, 3-Acetyl-3-fluorodihydrofuran-2(3H)-one, methyl undecafluoro-2-methyl-3-oxahexanoate, Methyl 2,2,2-Trifluoroethyl Carbonate (FEMC), and/or any combination thereof.

The fluorinated ether may comprise 3,3,4,4-Tetrafluoro-1-oxacyclopentane, 1,1-Difluoro-2-(2-Fluoroethoxy)ethane, 1-Fluoro-2-(2-Fluoroethoxy)ethane, Hexafluoroisopropyl Methyl Ether, 3,3,4,4-Tetrafluorotetrahydrofuran, Bis(2,2-difluoroethyl)ether, 1,2,2-TetraFluoroEthyl 2,2,3,3-TetraFluoroPropyl Ether, Bis(2,2-difluoroethyl)ether, 1,1,2,2,-Tetrafluoroethyl 2,2,2-trifluoroethyl ether, 1,2-(1,1,2,2,-Tetrafluoroethoxy)ethane (TFEE), Methoxyperfluorobutane, Bis(2,2,2-trifluoroethyl) ether, 1,1,2,2-Tetrafluoroethyl 2,2,3,3-tetrafluoropropyl ether, 2,2,3,3,3-Pentafluoropropyl 1,1,2,2-tetrafluoroethyl ether, and/or any combination thereof.

The second fluorinated carbonate (different from the fluorinated carbonate) may comprise 4-(Trifluoromethyl)-1,3-Dioxolane, 4-(Fluoromethyl)-1,3-dioxolan-2-one, Fluoromethyl methyl carbonate, 2,2-difluoroethyl methyl carbonate, 2,2-Difluoroethyl 2,2,2-trifluoroethyl carbonate., Ethyl (2,2,2-trifluoroethyl) carbonate, Bis(2,2,2-trifluoroethyl) carbonate, 3,3,3-Trifluoropropylene carbonate, trans-4,5-difluoroethylenecarbonate/trans-4,5-difluoro-1,3-dioxolan-2-one, Bis(pentafluorophenyl) carbonate, Trans-4,5-Difluoroethylenecarbonate, 4-Fluoro-1,3-Dioxolan-2-one, and/or any combination thereof.

The fluorinated sulfone may comprise 4-fluorophenyl methyl sulfone, bis(4-fluorophenyl) sulfone, phenyl difluoromethyl sulfone, fluoromethyl phenyl sulfone, phenyltrifluoromethyl sulfone, and/or any combination thereof.

The fluorinated epoxy may comprise 1,1,1-Trifluoro-2,3-epoxybutane, 1,2-Epoxy-3,3,3-trifluoropropane, Epifluorohydrin, and/or any combination thereof.

The fluorinated nitrile may comprise fluoroacetonitrile.

The fluorinated (meth)acrylate may comprise Hexafluoroisopropyl Acrylate, 2,2,2-Trifluoroethyl Acrylate, Methyl 2-Fluoroacrylate. 2,2,3,4,4,4-Hexafluorobutyl methacrylate, and/or any combination thereof.

The fluorinated silane may comprise (3,3,3-trifluoropropyl)methyldimethoxysilane, (3,3,3-Trifluoropropyl)trimethoxysilane, Trifluoromethyltrimethylsilane, and/or any combination thereof.

The fluorinated acetate may comprise Ethyl fluoroacetate, 2,2,2-Trifluoroethyl Acetate, Methyl 2,2-difluoro-2-(fluorosulfonyl)acetate, Methyl Trifluoroacetate, Methyl Fluoroacetate, Methyl Difluoroacetate, 2,2,2-Trifluoroethyl trifluoroacetate, and/or any combination thereof.

The fluorinated propionate may comprise Methyl 2-Fluoro-2-methylpropionate, Methyl 2-fluoropropionate, methyl perfluoro-2,5-dimethyl-3,6-dioxaheptanoate, methyl 2,2,3,3-tetrafluoro-3-(methoxy) propionate, Methyl 3,3,3-trifluoropropionate, Ethyl 3,3,3-trifluoropyruvate, and/or any combination thereof.

The fluorinated phosphate may comprise Bis(2,2,2-trifluoroethyl) methylphosphonate, Tris(2,2,2-trifluoroethyl) Phosphate, and/or any combination thereof.

The fluorinated sulfite may comprise Bis(2,2,2-Trifluoroethyl) Sulfite, Trifluoropmethanesulfonylmethane, Bis(trifluoromethanesulfonyl)methane, Tris(trifluoromethanesulfonyl)methane, and/or any combination thereof.

The fluorinated borate may comprise Tris(2,2,2-trifluoroethyl) borate.

The fluorinated benzene may comprise Benzotrifluoride, Fluorobenzene, and/or any combination thereof.

The fluorinated pyridine may comprise 2-Fluoropyridine.

The fluorinated diketone may comprise Hexafluoroacetylacetone.

In some non-limiting embodiments or aspects, the fluorinated compound may comprise the fluorinated ether.

In some non-limiting embodiments or aspects, either or both of the fluorinated carbonate and the fluorinated compound may comprise a cyclic fluorinated compound, such as a cyclic fluorinated carbonate.

In some non-limiting embodiments or aspects, the electrolyte composition may further comprise a non-fluorinated solvent. The non-fluorinated solvent may comprise up to 50 vol% based on total volume of the electrolyte composition excluding salts, such as up to 40 vol%, up to 30 vol%, or up to 20 vol%.

The non-fluorinated solvent may have a molecular weight of up to 150 g/mol, such as up to 100 g/mol.

The non-fluorinated solvent may have at least one hybrid atom. The at least one hybrid atom may comprise an atom from group IIIA (B, Al, Ga, In, TI), IVA (C, Si, Ge, Sn, Pb), VA (N, P, As, Sb, Bi), VIA (O, S, Se, Te), VIIA (F, Cl, Br, I), and/or any combination thereof. The at least one hybrid atom may comprise at least one of the following atoms: B, Al, Si, N, P, O, S, Se, F, Cl, Br, I, and/or any combination thereof. The at least one hybrid atom may comprise at least one of the following atoms: N, P, O, S, and/or any combination thereof. A compound comprising the hybrid atom may be in solid phase at room temperature and may be dissolved in and/or compatible with other electrolyte components.

Non-limiting examples of non-fluorinated solvents having at least one hybrid atom include: an ether (e.g., Dimethoxyethane, Dimethoxymethane (DME), 15-Crown 5-Ether, (R)-(-)-Glycidyl methyl ether, Tetraethylene glycol dimethyl ether, Polyethylene glycol) dimethyl ether MW 250, Polypropylene glycol) diglycidyl ether (Mn 380), Trimethylolpropane Triglycidyl Ether, 2-Methyltetrahydrofuran, 1,3-Dioxolane, and/or any combination thereof), an acrylate (e.g., Methyl trans-3-methoxyacrylate, Methyl Methacrylate, contains ≤ 30ppm MEHQ as inhibitor, 99%, and/or any combination thereof), a sulfone (e.g., Divinyl sulfone, Phenyl vinyl sulfone, Methyl vinyl sulfone, Ethyl vinyl sulfone, Sulfolane, and/or any combination thereof), a carbonate (e.g., diethyl carbonate (DEC), ethyl methyl carbonate, ethylene carbonate (EC), vinylene carbonate, propylene carbonate, and/or any combination thereof), an epoxy (e.g., 1,2-Epoxybutane, cis-2,3-Epoxybutane, and/or any combination thereof), a silane (e.g., Tetrakis(methoxyethoxy) silane, Methyl tris(methoxyethoxy) silane, Tetraisopropoxy silane, and/or any combination thereof), an ester:acetate (e.g., Ethyl Acetate, for HPLCm ≥99.7%, Diethylene glycol monoethyl ether acetate, Propylene glycol monomethyl ether acetate, Ethylene glycol diacetate, and/or any combination thereof), an ester:propionate (e.g., Ethyl propionate, Propyl propionate, Propylene glycol monomethyl ether propionate, and/or any combination thereof), an ionic liquid (e.g., 1-Ethyl-3-methylimidazolium bis(fluorosulfonyl)imide), a lactone (e.g., β-Propiolactone, γ-Butyrolactone, δ-Valerolactone, ε-Caprolactone, and/or any combination thereof), a formamide (e.g., Dimethylformamide, and/or any combination thereof), tetrahydrofuran (THF), tetrahydropyran (THP), and/or any combination thereof.

The compound comprising the hybrid atom may comprise at least one oxygen atom, such as an ester, an ether, a carbonate, an epoxy, and/or any combination thereof. The compound may have a molecular weight of up to 500 g/mol, such as up to 250 g/mol or up to 150 g/mol.

In some non-limiting embodiments or aspects, the electrolyte composition may comprise at least one salt. In some non-limiting embodiments or aspects, the electrolyte composition may comprise a plurality of different salts. It has been found that including a plurality of different salts as opposed to a single salt may improve the capacity of the battery in which the electrolyte composition is used.

Non-limiting examples of the salt and/or the plurality of salts may include: Bis(trifluoromethane)sulfonimide lithium salt (LiTFSI), Lithium hexafluorophosphate (LiPF₆), Lithium iodide, ultra dry (Lil), Lithium bis(fluorosulfonyl)amide (LiFSI), Lithium carbonate, ACS (Li₂CO₃), Lithium nitrate, anhydrous (LiNOs), Lithium Chloride (LiCI), Lithium Perchlorate (LiClO₄), Lithium Phosphate (Li₃PO₄), Lithium tetraborate (LiBF₄), Lithium Phosphate monobasic (H₂LiO₄P), Lithium fluoride (LiF), Lithium bromide (LiBr), Lithium bis(oxalate)borate (LiBOB), Lithium nitride (LiNOs), Lithium bis(pentafluoroethanesulfonyl)imide (LiPTFSI), Lithium 1,1,2,2,3,3-Hexafluoropropane-1,3-disulfonimide (LiHDF), Lithium difluoro(oxalato)borate (LiODFB), Lithium tetrafluoroborate (LiBF₄), Lithium hexafluoroarsenate(V) (LiAsF₆), Lithium difluoro(bisoxalato) phosphate (LiODFP), Lithium Phosphorodifluoridate (LiPO₂F₂), and/or any combination thereof.

The salt may have an anion with a gas-phase acidity value (at 25°C) of up to 370 kJ/mol, such as up to 350 kJ/mol, up to 330 kJ/mol, up to 315 kJ/mol, up to 295 kJ/mol, or up to 275 kJ/mol, as determined using HSC Chemistry 9 software (e.g., to determine ΔG values, H values, S values, Cp values, and the like). The electrolyte salts may be a salt of superacid. The stronger the acidity, the weaker the coordination of the anions may be with the associated cation (e.g., H⁺ cations, Li ions). The gas-phase acidity may be calculated using HA(g) 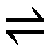 H(+g)+A(-g).

The electrolyte composition may have a salt concentration (of the salt and/or the plurality of salts) of from 0.2-6.0 M, such as from 0.4-5.0 M, from 0.6-4.5 M, from 0.8-2 M, from 0.8-1.2 M, or from 1.0-3.0 M. The electrolyte composition may have a salt concentration of at least 0.2 M, such as at least 0.4 M, at least 0.6 M, or at least 0.8 M. The electrolyte composition may have a salt concentration of up to 6.0 M, such as up to 5.0 M, up to 4.5 M, up to 3.0 M, or up to 2.0 M.

In some non-limiting embodiments or aspects, the electrolyte composition may further comprise a nitrile. The nitrile may comprise, Cyclopentanecarbonitrile, Propionitrile, Pentanonitrile, Acetonitrile, Benzonitrile, Butyronitrile, and/or any combination thereof.

The electrolyte composition may comprise up to 50 vol% nitrile based on total volume of the electrolyte composition excluding salts, such as up to 40 vol%, up to 30 vol%, or up to 20 vol%.

In some non-limiting embodiments or aspects, the electrolyte composition may comprise a plurality of different salts. The electrolyte composition may further comprise a fluorinated solvent comprising: (1) greater than 30 vol% fluorinated carbonate (e.g., at least 35 vol% or at least 40 vol%); or (2) at least 10 vol% fluorinated carbonate (e.g., at least 15 vol% or at least 20 vol%) and a fluorinated compound different from the fluorinated carbonate; or (3) at least 2 vol% (e.g., at least 4 vol% or at least 6 vol% or at least 8 vol%) fluorinated carbonate and a fluorinated compound (e.g., at least 22 vol%, at least 24 vol%, at least 26 vol%, or at least 28 vol%) different from the fluorinated carbonate, the vol% based on total volume of the electrolyte composition excluding salts. The plurality of different salts, the fluorinated carbonate, and the fluorinated compound may be as previously described.

Referring to FIG. 1, a battery 100 is shown according to non-limiting embodiments or aspects. The battery 100 in FIG. 1 may comprise a secondary (rechargeable) battery that undergoes a series of discharging (see FIG. 1, below dotted line) and re-charging (see FIG. 1, above dotted line) steps.

The battery 100 may comprise an anode 102 spaced apart from a cathode 104. An electrolyte composition 106 (e.g., the electrolyte composition as previously described herein) may be in fluid communication with the anode 102 and the cathode 104.

In the discharging process, the electron flow may be from the anode 102 to the cathode 104, and the current flow may be from the cathode 104 to the anode 102. An ion material 108 may flow through the electrolyte composition 106 from the anode 102 to the cathode 104. In some non-limiting examples, the ion material 108 may comprise lithium ions.

In the re-charging process, the electron flow may be from the cathode 104 to the anode 102, and the current flow may be from the anode 102 to the cathode 104. The ion material 108 may flow through the electrolyte composition 106 from the cathode 104 to the anode 102.

The battery 100 may comprise a separator (not shown) between the anode 102 and the cathode 104, which may be configured to allow for ion transport (e.g., the ion material 108) therethrough during charging and/or discharging of the battery 100. The battery 100 may comprise a charger 109 configured to re-charge the battery 100 after at least partial discharge thereof.

The battery 100 may comprise one or more current collectors (not shown). The anode 102 and/or the cathode 104 may comprise a current collector to function as a support for the electrodes. The current collector may function as an electrical conductor between the electrodes and any external circuits. The current collector may be made from any suitable material, such as aluminum, copper, nickel, titanium, stainless steel, and/or any combination thereof. For example, the current collector for the anode 102 may be made from copper. For example, the current collector for the cathode 104 (not shown) may be made from aluminum. The current collector may take any form, such as a foil, a mesh, a foam, and/or a carbon-coated type current collector.

With continued reference to FIG. 1, in some non-limiting embodiments or aspects, the cathode 104 may comprise at least one of: at least one material including a chalcogen element (e.g., S, Se, O, and Te), fluoride, at least one intercalated cathode material (e.g., LiCoO₂, LiMnO₂, LiNiO₂, LiCoₓNi_{y}Mn_{1-x-y}O₂), and LiFePO₄ that may include various dopants such as Ni, Mg, Al, Cr, Zn, Ti, Fe, Co, Ni, Cu, Nd, and La, at least one supercapacitor material (e.g., metal oxides/hydroxides), conductive polymers, or some combination thereof. The cathode 104 may comprise a chalcogen. The cathode 104 may comprise sulfur.

In some non-limiting embodiments or aspects, the cathode 104 may comprise a substrate coated with a coating comprising a carbon-chalcogen composite. The coating may further comprise a binder and conductive carbon. The binder may comprise a polymeric material. Non-limiting examples of suitable polymeric materials include carboxy methyl cellulose (CMC), polyvinylidene fluoride (PVDF), polytetrafluoroethylene (PTFE), styrene-butadiene rubber (SBR), polyethylene glycol dimethyl ether (PEGDME), conductive polymer(s) (such as poly(3,4-ethylenedioxythiophene) (PEDOT)), polyacrylic acid (PAA), polyethylenimine (PEI), a latex polymer, an acrylate, a polyurethane, a polyurethane acrylate, and the like.

The carbon-chalcogen composite may comprise at least 50 wt% chalcogen, such as at least 60 wt% chalcogen, based on solids weight of the carbon-chalcogen composite. The carbon-chalcogen composite may comprise a carbon-sulfur composite having a sulfur:carbon weight ratio of at least 50:50, such as at least 55:45, at least 60:40, such as 64:36. The carbon-chalcogen composite may comprise at least 35 wt% chalcogen, based on solids weight of the cathode.

The coating comprising the carbon-chalcogen composite may comprise at least 60 wt% of the carbon-chalcogen composite, such as at least 70 wt% or at least 80 wt%. The coating comprising the carbon-chalcogen composite may comprise up to 20 wt% of conductive carbon, such as up to 15 wt% or up to 10 wt%. The coating comprising the carbon-chalcogen composite may comprise up to 20 wt% of the binder, such as up to 15 wt% or up to 10 wt%.

In some non-limiting embodiments or aspects, the battery comprising the electrolyte composition having greater than 30 vol% fluorinated carbonate and no other fluorinated compound may be used with a cathode formed using a coating having the carbon-chalcogen composite as described herein. It will be appreciated that the cathode formed using a coating having the carbon-chalcogen composite as described herein may be used with other electrolyte compositions described herein, such as electrolyte compositions including a plurality of fluorinated compounds and/or a plurality of different salts.

In some non-limiting embodiments or aspects, the cathode 104 may comprise at least 30 wt% of sulfur (and/or other active material, such as chalcogen material), based on total weight of the overall cathode 104 (which includes active materials and inactive materials (e.g., binders, conductive carbon, and the like), such as at least 35 wt%, at least 40 wt%, at least 45 wt%, or at least 50 wt%. In some non-limiting embodiments or aspects, the cathode 104 may comprise up to 90 wt% of sulfur, based on total weight of the overall cathode 104, such as up to 85 wt%, up to 80 wt%, or up to 75 wt%.

In some non-limiting embodiments or aspects, the cathode 104 may have a loading level of from 2-100 mg-S/cm², such as from 2-80 mg-S/cm², or 2-50 mg-S/cm². The cathode 104 may have a loading level of at least 2 mg-S/cm². The cathode 104 may have a loading level of up to 100 mg-S/cm², such as up to 80 mg-S/cm² or up to 50 mg-S/cm². The loading level may be determined by measuring the coating weight and surface area of the coating.

With continued reference to FIG. 1, in some non-limiting embodiments or aspects, the anode 102 may comprise at least one of: at least one element from group IVA (e.g., C, Si, Sn), at least one element from group IIIA (e.g., Al), at least one transition metal from group IB-VIIIB (e.g., Zn, Cd, Ag), at least one alkaline earth metal from group IIA (e.g., Mg, Ca), at least one alkali metal from group IA (e.g., Li, Na, K), at least one compound (e.g., LiₓSi_{y}, LiₓGe_{y}, LiAl, LiₓSn_{y}, LTO, NiO, SiOₓ), or some combination thereof. The anode 102 may comprise at least one of an alkali metal from group IA, an alkaline earth metal from group IIA, an element from group IIIA, and/or some combination thereof. The anode 102 may comprise lithium and/or sodium, such as lithium.

In some non-limiting embodiments or aspects, the battery 100 may comprise the cathode 104 comprising a chalcogen and the anode 102 comprising lithium, such as a sulfur cathode 104 and a lithium anode 102 (e.g., a lithium-chalcogen and/or lithium-sulfur battery).

In some non-limiting embodiments or aspects, the battery 100 may comprise an electrolyte composition 106. The electrolyte composition 106 may be a liquid, solid, or gel material. The electrolyte composition 106 may be positioned between the cathode 104 and the anode 102 (the electrodes). The electrolyte may wet or soak the electrodes.

In some non-limiting embodiments or aspects, the battery 100 may comprise an electrolyte to sulfur (E/S) ratio of up to 10, such as up to 7, up to 5, up to 4, up to 3, up to 2.5, or up to 2 (e.g., a battery 100 with lean electrolyte conditions). The E/S ratio may be determined by dividing electrolyte volume (mL) by the cathode active materials (g). Such 100 battery may comprise the electrolyte composition 106 and a sulfur cathode 104.

The battery 100 may have an activation energy of at least 95 kJ/mol, as determined by TGA following the procedures described in ASTM Method E1641-16.

The battery may have a high midpoint voltage (Mid-V) of at least 1.70 V, such as at least 1.74V or at least 1.78 V, under a current density of greater than 0.8 mA/cm², such as at least 1.0 mA/cm² or at least 1.2 mA/cm². Midpoint voltage may be the voltage when battery is discharged to 50% capacity at a defined current density.

In some non-limiting embodiments or aspects the battery 100 is a primary battery.

In some non-limiting embodiments or aspects in which the battery 100 is a secondary battery, the secondary battery may be cycled by: providing the battery 100 in the form of a secondary battery as described herein. The secondary battery may be at least partially discharged, and subsequently may be at least partially charged. The secondary battery may be discharged and charged in the cyclic manner described herein, which cycles may be repeated at least until the secondary battery exhibits a parasitic condition during a charging step.

In some non-limiting embodiments or aspects, the secondary battery may provide at least 30 cycles before exhibiting a parasitic condition during a charging step, such as at least 50 cycles, at least 75 cycles, or at least 100 cycles.

The battery 100 may be used in any suitable applications. In some non-limiting examples, the battery 100 may be used in consumer electronics, in vehicles (e.g., electric vehicles), and the like.

The battery 100 may comprise a coin cell battery, a cylindrical cell, and/or a pouch cell.

In some non-limiting embodiments or aspects, the battery 100 may have a capacity retention at 0°C of at least 50%, such as at least 60%, or at least 70%, compared to room temperature (e.g., 20°C). Capacity retention after one month storage at 45°C and testing at room temperature may be at least 80%, at least 85%, or at least 90%. The battery 100 may have a 5-second pulse at current density of greater than 6 mA/cm², such as at least 7 mA/cm² or at least 8 mA/cm², with 10% capacity interval at 3, 4, or 5 pulses.

The present disclosure is also directed to a method for producing a rechargeable battery, the rechargeable battery as described in this disclosure. Referring to FIG. 1, the method may comprise arranging the electrolyte composition 106 in contact with both the anode 102 and the cathode 104 of the battery 100 to form a rechargeable battery.

### EXAMPLES

The following examples are presented to demonstrate the general principles of the disclosure. The disclosure should not be considered as limited to the specific examples presented.

### Examples 1-7

### Preparation of an Electrolyte Compositions

Electrolyte compositions were prepared according to the following Table 1.

**Table 1**

| **Example** | **Salt Concentration** | **Salt(s) (Mol%)** | **Solvent(s) (Vol%)** | **E/S** | **Sulfur Loading (mg)** | **Mid-V at Cycle #3** |
|---|---|---|---|---|---|---|
| | | | 20 FEC | | | |
| | | | 40 DEC | | | |
| CE1 | 1.000 M | 100 LiPF₆ | 40 EC | 4.0 | 5.381 | 1.0921 |
| | | | 35 FEC | | | |
| | | 58 LiFSI | 30 TFEE | | | |
| Ex. 2 | 2.077 M | 42 LiTFSI | 35 DME | 4.0 | 4.449 | 1.8993 |
| | | | 35 FEC | | | |
| | | 66 LiFSI | 47 TFEE | | | |
| Ex. 3 | 2.597 M | 34 LiTFSI | 18 DME | 4.0 | 4.879 | 1.9013 |
| | | | 35 FEC | | | |
| | | | 35 TFEE | | | |
| Ex. 4 | 2.077 M | 100 LiFSI | 30 DME | 4.0 | 5.304 | 1.8989 |
| | | | 50 FEC | | | |
| | | 66 LiFSI | 27 TFEE | | | |
| Ex. 5 | 2.597 M | 34 LiTFSI | 23 DME | 4.0 | 4.628 | 1.9117 |
| | | 90 LiFSI | 35 FEC | | | |
| | | 5 LiTFSI | 35 TFEE | | | |
| Ex. 6 | 2.077 M | 5 LiBF₄ | 30 DME | 4.0 | 5.320 | 1.8876 |
| | | 90 LiFSI | | | | |
| | | 8 LiTFSI | 35 FEC | | | |
| | | 1 LiBF₄ | 35 TFEE | | | |
| Ex. 7 | 1.000 M | 1 LiClO₄ | 30 DME | 4.0 | 5.268 | 1.8741 |

This electrolyte composition from Table 1 were included in a coin cell battery having a lithium anode and a chalcogen (sulfur) cathode, the cathode being a carbon-chalcogen composite having at least 50 wt% sulfur based on solids weight of the carbon-chalcogen composite and at least 35 wt% sulfur based on total solids weight of the cathode. The mid-V of the coin cell batteries were determined, under a current density of greater than 0.8 mA/cm², such as at least 1.0 mA/cm² or at least 1.2 mA/cm².

Examples 2-7 showed an improved mid-V at cycle #3 compared to Comparative Example 1.

Although the disclosed subject matter has been described in detail for the purpose of illustration based on what is currently considered to be the most practical and preferred embodiments or aspects, it is to be understood that such detail is solely for that purpose and that the disclosed subject matter is not limited to the disclosed embodiments or aspects, but, on the contrary, is intended to cover modifications and equivalent arrangements that are within the spirit and scope of the appended claims. For example, it is to be understood that the presently disclosed subject matter contemplates that, to the extent possible, one or more features of any embodiment or aspect can be combined with one or more features of any other embodiment or aspect.

## Claims

1. A battery, comprising:
an anode;
a cathode comprising chalcogen separated from the anode; and
an electrolyte composition in fluid communication with the anode and the cathode, the electrolyte composition comprising a fluorinated solvent comprising:
greater than 30 vol% fluorinated carbonate, used with the cathode comprising a carbon-chalcogen composite having at least 50 wt% chalcogen based on solids weight of the carbon-chalcogen composite; and/or
at least 20 vol% fluorinated carbonate and a fluorinated compound different from the fluorinated carbonate,
the vol% based on total volume of the electrolyte composition excluding salts.

2. The battery of claim 1, wherein the electrolyte composition comprises at least 40 vol% of the fluorinated solvent, based on total volume of the electrolyte composition excluding salts.

3. The battery of any preceding claim, wherein the fluorinated carbonate comprises fluoroethylene carbonate.

4. The battery of any preceding claim, wherein the fluorinated solvent comprises the fluorinated carbonate and the fluorinated compound, the fluorinated carbonate comprising fluoroethylene carbonate, the fluoroethylene carbonate comprising at least 20 vol%, based on total volume of the electrolyte composition excluding salts.

5. The battery of any preceding claim, wherein the fluorinated compound comprises a fluorinated ester, a fluorinated ether, a second fluorinated carbonate, a fluorinated sulfone, a fluorinated epoxy, a fluorinated nitrile, a fluorinated (meth)acrylate, a fluorinated silane, a fluorinated (poly)glycol ether, a fluorinated acetate, a fluorinated propionate and/or any combination thereof, and preferably wherein the fluorinated compound comprises a fluorinated ether.

6. The battery of any preceding claim, wherein the electrolyte composition comprises a plurality of different salts, and preferably having a salt concentration of the plurality of different salts of from 0.2-6.0M.

7. The battery of any preceding claim, wherein the fluorinated carbonate and/or the fluorinated compound comprises a cyclic fluorinated carbonate.

8. The battery of any preceding claim, wherein the electrolyte composition further comprises a nitrile.

9. The battery of any preceding claim, wherein the anode comprises lithium, and the cathode comprises sulfur, and optionally wherein the battery comprises an electrolyte to sulfur (E/S) ratio of up to 10, and/or wherein the sulfur cathode comprises at least 30 wt.% of sulfur and/or wherein the cathode has a loading level of from 2-100 mg-S/cm2.

10. The battery of any preceding claim, wherein the battery comprises a secondary battery.

11. The battery of any preceding claim, wherein the battery comprises a coin cell, a cylindrical cell, and/or a pouch cell.

12. The battery of any preceding claim, having an activation energy of at least 95 kJ/mol.

13. The battery of any preceding claim, wherein the electrolyte composition further comprises a non-fluorinated solvent, the non-fluorinated solvent having a hybrid atom and a molecular weight of up to 150 g/mol.

14. The battery of any preceding claim, wherein the cathode comprises a carbon-chalcogen composite having at least 50 wt% chalcogen based on solids weight of the carbon-chalcogen composite and/or at least 35 wt% chalcogen based on total solids weight of the cathode.

15. A battery, comprising:
an anode;
a cathode comprising chalcogen separated from the anode; and
an electrolyte composition in fluid communication with the anode and the cathode, the electrolyte composition comprising a fluorinated solvent comprising:
(1) greater than 30 vol% fluorinated carbonate; or
(2) at least 10 vol% fluorinated carbonate and a fluorinated compound different from the fluorinated carbonate; or
(3) at least 2 vol% fluorinated carbonate and a fluorinated compound different from the fluorinated carbonate,
the vol% based on total volume of the electrolyte composition excluding salts;
the electrolyte composition further comprising a plurality of different salts.
